(19) Europäisches Patentamt
European Patent Office
Office européen des brevets

(11) Veröffentlichungsnummer: **0 040 356**
**B1**

(12) # EUROPÄISCHE PATENTSCHRIFT

(45) Veröffentlichungstag der Patentschrift: **19.10.83**

(51) Int. Cl.$^3$: **C 07 F 7/10**

(21) Anmeldenummer: **81103433.9**

(22) Anmeldetag: **06.05.81**

(54) **Verfahren zur Herstellung von Trimethylsilylcyanid.**

(30) Priorität: **16.05.80 DE 3018821**

(43) Veröffentlichungstag der Anmeldung: **25.11.81 Patentblatt 81/47**

(45) Bekanntmachung des Hinweises auf die Patenterteilung: **19.10.83 Patentblatt 83/42**

(84) Benannte Vertragsstaaten: **AT BE CH DE FR GB IT LI NL**

(56) Entgegenhaltungen:
**Patents Abstracts of Japan Band 3, Nr. 11, 30, Januar 1979, Seite 12C35**
**Chemical Abstracts Band 91, Nr. 17, 22. Oktober 1979, Columbus, Ohio, USA, S. HUENIG et al., »A simple and productive synthesis of trimethysilyl cyanide«, Seite 665, linke Spalte, Abstract Nr. 140901y**
**Chemical Abstracts Band 91, Nr. 17, 22. Oktober 1979, Columbus, Ohio, USA, J. K. RASMUSSEN et al., »A simple, safe, and inexpensive preparation of trimethylsilyl cyanide«, Seite 665, linke Spalte, Abstract Nr. 140902z**

(73) Patentinhaber: **BAYER AG, Zentralbereich Patente, Marken und Lizenzen, D-5090 Leverkusen 1, Bayerwerk (DE)**

(72) Erfinder: **Findeisen, Kurt, Dr., In der Follmühle 10, D-5068 Odenthal 2 (DE)**
Erfinder: **Linker, Karl-Heinz, Albert-Schweitzer-Strasse 3, D-5090 Leverkusen 1 (DE)**

**JOURNAL OF ORGANIC CHEMISTRY, Band 43, Nr. 11, 26. Mai 1978, Easton, E. C. TAYLOR, »Thallium in Organic Synthesis. 50. A Convenient Synthesis of Thallium(I) Cyanide, a Useful Reagent in Organic Synthesis«, Seiten 2280 bis 2282**
**Chemical Abstracts Band 88, Nr. 23, 5. Juni 1978, Columbus, Ohio, USA, I. RYU et al., »An improved procedure for dicyanodimethylsilane and cyanotrimethylsilane«, Seite 603, rechte Spalte, Abstract Nr. 170225m**

**EP 0 040 356 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Verfahren zur Herstellung von Trimethylsilylcyanid

Gegenstand der vorliegenden Erfindung ist ein neues, verbessertes Verfahren zur Herstellung von Trimethylsilylcyanid aus Trimethylsilylchlorid. Trimethylsilylcyanid ist ein wertvolles Zwischenprodukt, u. a. zur Herstellung von Acylcyaniden, und kann damit z. B. zur Synthese bestimmter herbizid wirksamer Heterocyclen verwendet werden.

In der Literatur ist eine Reihe von Verfahren zur Herstellung von Trimethylsilylcyanid beschrieben, die aber alle mit mehr oder weniger großen Nachteilen verbunden sind. Entweder wird zur Herstellung von Trimethylsilylcyanid das teure Silbercyanid (J. Amer. Chem. Soc., 81, 4493 [1959]) oder der technisch schwieriger zu handhabende Cyanwasserstoff (J. Org. Chem., 39, 914 [1974]; Synthesis, 1978, 154; J. Amer. Chem. Soc., 80, 4151 [1958]) verwendet. Andere Verfahren erfordern einen hohen apparativen Aufwand (Z. Anorg. Allg. Chem., 313, 290 [1962]; Tetrahedron Letters, 1975, 71; J. Org. Chem., 43, 2280 [1978]).

Weiterhin ist bekanntgeworden, daß man Trimethylsilylcyanid herstellen kann, indem man Trimethylsilylchlorid mit Natriumcyanid in N,N'-Dimethylimidazolidinon, N,N,N',N',N'',N''-Hexamethyl-phosphorsäuretriamid oder N,N-Dimethylformamid umsetzt und destillativ aufarbeitet.

Die Reaktionstemperatur liegt zwischen Raumtemperatur und 200° C, vorzugsweise zwischen 90 und 140° C; ein Katalysator wird nicht verwendet (vgl. JP-A-53-132525; Patents Abstracts of Japan, Band 3, Nr. 11, 30. 1. 1979, Seite 12C35). Mit diesem Verfahren erzielt man jedoch nur Ausbeuten von 30–42% der Theorie an Trimethylsilylcyanid. Die Hauptursache für die relativ niedrigen Ausbeuten dürfte darin liegen, daß das Trimethylsilylcyanid – wenn auch langsam – mit den Lösungsmitteln reagiert, offenbar unter Silylierung.

In letzter Zeit (S. Hünig et al., Synthesis, 1979, 522, und J. K. Rasmussen et al., Synthesis, 1979, 523) wurde eine Synthese aus Trimethylsilylchlorid und überschüssigem Natriumcyanid bzw. Kaliumcyanid in N-Methylpyrrolidon als Lösungsmittel bekannt. Nach Rasmussen et al. beträgt die Ausbeute, bei einem 0,4-Mol-Ansatz und Verwendung von Kaliumcyanid, 71% der Theorie. Nach Hünig et al. muß, bei einem 5-Mol-Ansatz und Verwendung von Natriumcyanid, zur Erzielung einer Ausbeute von 60 bis 70% der Theorie der Phasentransferkatalysator Adogen 464® (vgl. Angew. Chem., 90, 58 [1978]) zugesetzt werden, da die Ausbeuten sonst nur 20 bis 30% der Theorie betragen.

Bei den Verfahrensvarianten haftet, abgesehen von der mäßigen Ausbeute, der Nachteil an, daß das Alkalicyanid im Überschuß eingesetzt werden muß und daß relativ lange Reaktionszeiten benötigt werden; so sind für die Umsetzung von 5 Mol Trimethylsilylchlorid mit Natriumcyanid 30 bis 36 Stunden bzw. für die Umsetzung von 0,4 Mol Trimethylsilylchlorid mit Kaliumcyanid 16 Stunden Reaktionszeit erforderlich. Außerdem muß bei einer der beiden Verfahrensvarianten, wie angegeben, ein bestimmter Phasentransferkatalysator zugesetzt werden.

Es bestand daher ein dringendes technisches Bedürfnis dafür, die bisher bekannten, von Trimethylsilylchlorid und Alkalicyanid ausgehenden Verfahren so zu verbessern, daß die Reaktionszeiten auf ein technisch vertretbares Maß gesenkt, die Einsatzüberschüsse an Alkalicyanid vermieden und die Ausbeuten auch in technischen Ansätzen wesentlich gesteigert werden.

Es wurde nun überraschend gefunden, daß man Trimethylsilylcyanid in sehr großer Ausbeute und Reinheit aus Trimethylsilylchlorid und Alkalicyanid erhält, wenn man das Trimethylsilylchlorid mit der etwa äquimolaren Menge eines Alkalicyanids in Gegenwart einer katalytischen Menge eines Schwermetallcyanids und in Gegenwart eines oberhalb von 150° C siedenden, aprotischen Lösungsmittels bei Temperaturen zwischen 130 und 250° C umsetzt und das Trimethylsilylcyanid im Maße seiner Entstehung durch Destillation aus dem Reaktionsgemisch entfernt, wobei gegebenenfalls nicht umgesetztes, gleichzeitig mitdestilliertes Trimethylsilylchlorid durch Verdampfung vom Trimethylsilylcyanid abgetrennt und bis zu seiner praktisch vollständigen Umsetzung im Kreislauf in das Reaktionsgefäß zurückgeführt wird.

Das erfindungsgemäße Verfahren vermeidet die Nachteile der vorbekannten Verfahren und stellt somit eine wesentliche Verbesserung dar. So beträgt die Reaktionszeit z. B. für einen 4-Mol-Ansatz nur ca. 2 Stunden. Das Alkalicyanid braucht nur in stöchiometrischen Mengen eingesetzt zu werden und die Ausbeuten an reinem Trimethylsilylcyanid liegen über 90% der Theorie.

Verwendet man als Alkalicyanid Natriumcyanid, als Schwermetallcyanid Kupfer(I)-cyanid und als aprotisches Lösungsmittel Tetramethylensulfon (»Sulfolan«), so kann der Reaktionsablauf durch das folgende Formelschema wiedergegeben werden:

$$(CH_3)_3Si-Cl + NaCN \xrightarrow[\text{Sulfolan}]{[CuCN]} (CH_3)_3Si-CN + NaCl$$

Als Alkalicyanide werden bevorzugt Natriumcyanid und Kaliumcyanid verwendet.

Als Schwermetallcyanide, die in katalytischen Mengen eingesetzt werden, seien insbesondere Kupfer(I)-cyanid, Kupfer(II)-cyanid und Zinkcyanid sowie deren Komplexverbindungen mit Alkalicyaniden, wie sie z. B. bei der Umsetzung von Natriumcyanid mit Kupfer(I)-cyanid entstehen, genannt:

$$3\,NaCN + CuCN \longrightarrow Na_3Cu(CN)_4$$

Es können aber auch Schwermetallsalze verwendet werden, die unter den Reaktionsbedingungen in Schwermetallcyanide überführt werden.

Als aprotische Lösungsmittel, die bei der Durchführung des erfindungsgemäßen Verfahrens eingesetzt werden können, kommen alle aprotischen Lösungsmittel in Betracht, die weder mit dem Trimethylsilylchlorid noch den Metallcyaniden eine chemische Reaktion eingehen und deren Siedepunkte in einem geeigneten Siedebereich (150 bis etwa 300°C) liegen. Als bevorzugtes Lösungsmittel wird Tetramethylensulfon verwendet.

Die Reaktionstemperatur kann in einem größeren Bereich variiert werden; sie soll in jedem Falle höher sein als die Siedepunkte des Trimethylsilylchlorids (ca. 57°C) und des Trimethylsilylcyanids (ca. 117°C). Wie oben angegeben, arbeitet man bei Temperaturen zwischen 130 und 250°C, vorzugsweise zwischen 160 und 220°C.

Die Umsetzung wird im allgemeinen bei Normaldruck durchgeführt.

Bei der Durchführung des erfindungsgemäßen Verfahrens setzt man Trimethylsilylchlorid und Alkalicyanid vorzugsweise in stöchiometrischen Mengen um. Das Schwermetallcyanid wird in unterstöchiometrischen, katalytischen Mengen eingesetzt, im allgemeinen in Mengen von 0,5 bis 10 Mol-%, vorzugsweise in Mengen von 1 bis 8 Mol-%, bezogen auf Alkalicyanid.

Von entscheidender Bedeutung für den Erfolg des erfindungsgemäßen Verfahrens ist ferner die Maßnahme, daß das Trimethylsilylcyanid im Maße seiner Entstehung durch Destillation aus dem Reaktionsgemisch entfernt wird. Dies hat gegenüber den vorbekannten Verfahren den Vorteil, daß die Umsetzung bei höherer Temperatur und damit mit wesentlich höherer Reaktionsgeschwindigkeit durchgeführt werden kann und daß andererseits das jeweils gebildete, sehr reaktionsfähige Trimethylsilylcyanid nicht über einen langen Zeitraum im Reaktionsgemisch erhitzt werden muß. Nebenreaktionen, die sonst offenbar eintreten und zu deutlichen Ausbeuteverlusten führen, werden durch diese Verfahrensweise vollständig unterdrückt.

Zusammen mit dem Trimethylsilylcyanid destilliert im allgemeinen auch nichtumgesetztes Trimethylsilylchlorid aus dem Reaktionsgefäß ab, in einer Menge, die im wesentlichen von der Zulaufgeschwindigkeit und der gewählten Reaktionstemperatur abhängt. Um vollständigen Umsatz zu erreichen ist es zweckmäßig, das relativ leicht flüchtige Trimethylsilylchlorid unter Verwendung einer geeigneten Apparatur (vgl. Beispiel 1) vom Trimethylsilylcyanid abzutrennen und im Kreislauf in das Reaktionsgefäß zurückzuführen, bis praktisch vollständiger Umsatz erreicht ist.

Nach einer besonderen Ausführungsform des erfindungsgemäßen Verfahrens kann die nach beendeter Umsetzung im Reaktionsgefäß verbleibende Mischung aus aprotischem Lösungsmittel, Schwermetallcyanid und Alkalichlorid unmittelbar als Reaktionsmedium für einen weiteren Ansatz unter sonst gleichen Bedingungen verwendet werden. Diese Reaktionsfolge kann gegebenenfalls mehrfach wiederholt werden, solange das Reaktionsmedium noch gut rührbar ist. Diese Ausführungsform ist bevorzugt und stellt eine halbkontinuierliche Verfahrensweise dar.

Reines Trimethylsilylcyanid wird aus dem rohen Reaktionsprodukt durch anschließende Destillation gewonnen. Die Ausbeuten an reinem Trimethylsilylcyanid liegen über 90% der Theorie.

Trimethylsilylcyanid ist ein wertvolles, vielseitig verwendbares Zwischenprodukt der organischen Chemie (vgl. z. B. Synthesis, 1979, Seiten 522 und 523). Es kann insbesondere als Ausgangsprodukt zur Herstellung von Acylcyaniden verwendet werden (vgl. z. B. Synthesis, 1979, Seiten 204 bis 205), welche ihrerseits zur Synthese von 1,2,4-Triazin-5-onen, die hervorragende herbizide Eigenschaften besitzen, eingesetzt werden können.

So läßt sich Trimethylsilylcyanid beispielsweise durch Umsetzung mit Pivaloylchlorid glatt in Pivaloylcyanid überführen —

$$(CH_3)_3C{-}COCl + (CH_3)_3SiCN \longrightarrow (CH_3)_3C{-}COCN + (CH_3)_3SiCl$$

welches nach bekannten Verfahren z. B. in den herbiziden Wirkstoff 3-Methylthio-4-amino-6-tert.-butyl-1,2,4-triazin-5(4H)-on umgewandelt werden kann (vgl. z. B. DE-PS 1 795 784, DE-OS 2 733 180, US-PS 4 175 188).

Durch Umsetzung mit Benzoylchlorid läßt sich Trimethylsilylcyanid analog in Benzoylcyanid überführen (vgl. Herstellungsbeispiel), das sich ebenfalls nach bekannten Verfahren z. B. zu dem herbiziden Wirkstoff 3-Methyl-4-amino-6-phenyl-1,2,4-triazin-5(4H)-on weiter umsetzen läßt (vgl. z. B. DE-OS 2 224 161, 2 364 474, 2 528 211, 2 708 189).

## Beispiel 1

In einem 2-l-Vierhalskolben (versehen mit Rührer, Thermometer, Zulaufrohr, das mit einem Vorratsgefäß für $(CH_3)_3SiCl$ verbunden ist, und aufgesetzter kurzer Kolonne) werden 200 g (4 Mol) 98%iges Natriumcyanid und 20 g (0,22 Mol) Kupfer(I)-cyanid in 500 ml trockenem Tetramethylensulfon vorgelegt und auf 180 bis 190°C erwärmt. Bei dieser Temperatur werden langsam 434 g (4 Mol)

Trimethylsilylchlorid (gaschromatographisch bestimmter Gehalt: 98,6%) zulaufen gelassen. Das im Reaktionsverlauf gebildete Trimethylsilylcyanid wird ständig aus dem Reaktionsgemisch entfernt, indem es zusammen mit nichtumgesetztem Trimethylsilylchlorid über die aufgesetzte kurze Kolonne und eine anschließende Destillationsbrücke aus dem Reaktionsgefäß in einen auf 90°C gehaltenen 1-l-Vierhalskolben (versehen mit Rührer, Thermometer, Zuführungsrohr von der vorerwähnten Destillationsbrücke und aufgesetzter, auf 70°C gehaltener Kolonne sowie mit Bodenablaßventil) geführt wird. Das Trimethylsilylchlorid wird aus dem übergangenen Gemisch aufgrund seines relativ niedrigen Siedepunktes (ca. 57°C) durch Verdampfung ausgetrieben und über die auf 70°C gehaltene Kolonne mit einer anschließenden Destillationsbrücke in das Vorratsgefäß und damit im Kreislauf in das Reaktionsgefäß zurückgeführt. Nach einer Reaktionszeit von 2 Stunden ist die vorgegebene Menge an Trimethylsilylchlorid umgesetzt.

In die im Reaktionsgefäß verbleibende dünnflüssige Tetramethylensulfon/Kupfer(I)-cyanid/Natriumcyanid-Suspension werden erneut 200 g (4 Mol) Natriumcyanid und 434 g (4 Mol) Trimethylsilylchlorid zugegeben bzw. letzteres im Kreis geführt. Die Umsetzung erfolgt, wie zuvor beschrieben, wiederum bei 180 bis 190°C innerhalb von 2 Stunden. Das im Reaktionsgefäß zurückbleibende Reaktionsmedium ist nach beendeter Umsetzung noch gut rührbar.

Nun erfolgt erneute Zugabe von 200 g (4 Mol) Natriumcyanid und 434 g (4 Mol) Trimethylsilylchlorid, die wiederum innerhalb von 2 Stunden bei 180 bis 190°C wie oben beschrieben umgesetzt werden.

Das durch das Bodenablaßventil des auf 90°C gehaltenen Vierhalskolbens abgelassene Rohprodukt enthält noch geringe Mengen an Trimethylsilylchlorid und wird zur Auftrennung und Reinigung über eine 30 cm lange Kolonne mit Kolonnenkopf fraktioniert destilliert. Zunächst destilliert das restliche Trimethylsilylchlorid ab, Siedepunkt: 57,3°C.

Als Hauptfraktion erhält man das Trimethylsilylcyanid, Siedepunkt 115 bis 117°C; Schmelzpunkt ca. 15°C.

Gesamtausbeute: 1118 g Trimethylsilylcyanid (=94% der Theorie).

Umsetzung Trimethylsilylcyanid → Benzoylcyanid

$(CH_3)_3SiCN + C_6H_5COCl \rightarrow (CH_3)_3SiCl + C_6H_5COCN$

In einem 250-ml-Vierhalskolben (versehen mit Rührer, Thermometer, Tropftrichter und aufgesetzter Destillationsbrücke) werden 70,3 g (0,5 Mol) Benzoylchlorid vorgelegt und auf 110°C erwärmt. Innerhalb von 20 Minuten werden 49,5 g (0,5 Mol) Trimethylsilylcyanid zugetropft; das dabei entstehende Trimethylsilylchlorid wird gleichzeitig abdestilliert. Der Rückstand wird im Vakuum fraktioniert destilliert.

Ausbeute: 53 g (82% der Theorie) Benzoylcyanid vom Siedepunkt 86 bis 88°C/11 mbar und Schmelzpunkt 31°C.

**Patentansprüche**

1. Verfahren zur Herstellung von Trimethylsilylcyanid aus Trimethylsilylchlorid und Alkalicyanid, dadurch gekennzeichnet, daß man Trimethylsilylchlorid mit der etwa äquimolaren Menge eines Alkalicyanids in Gegenwart einer katalytischen Menge eines Schwermetallcyanids und in Gegenwart eines oberhalb von 150°C siedenden, aprotischen Lösungsmittels bei Temperaturen zwischen 130 und 250°C umsetzt und das Trimethylsilylcyanid im Maße seiner Entstehung durch Destillation aus dem Reaktionsgemisch entfernt, wobei gegebenenfalls nichtumgesetztes, gleichzeitig mitdestilliertes Trimethylsilylchlorid durch Verdampfung vom Trimethylsilylcyanid abgetrennt und bis zu seiner vollständigen Umsetzung im Kreislauf in das Reaktionsgefäß zurückgeführt wird.

2. Verfahren nach Anspruch 1, dadurch gekennzeichnet, daß man bei Temperaturen zwischen 160 und 220°C arbeitet.

3. Verfahren nach Anspruch 1, dadurch gekennzeichnet, daß Trimethylsilylchlorid und Alkalicyanid in äquimolaren Mengen und das Schwermetallcyanid in Mengen von 0,5 bis 10 Mol-%, bezogen auf das Alkalicyanid, eingesetzt werden.

4. Verfahren nach Anspruch 1, dadurch gekennzeichnet, daß als Alkalicyanid Natriumcyanid oder Kaliumcyanid eingesetzt wird.

5. Verfahren nach Anspruch 1, dadurch gekennzeichnet, daß als Schwermetallcyanid Kupfer(I)-cyanid, Kupfer(II)-cyanid, Zinkcyanid oder eine Komplexverbindung dieser Schwermetallcyanide mit Alkalicyanid eingesetzt wird.

6. Verfahren nach Anspruch 1, dadurch gekennzeichnet, daß als aprotisches Lösungsmittel Tetramethylensulfon eingesetzt wird.

7. Ausgestaltung des Verfahrens nach Anspruch 1 zu einer halbkontinuierlichen Verfahrensweise, dadurch gekennzeichnet, daß die nach beendeter Umsetzung im Reaktionsgefäß verbleibende Mischung aus dem aprotischen Lösungsmittel, Schwermetallcyanid und Alkalichlorid unmittelbar als Reaktionsmedium für einen weiteren Ansatz unter sonst gleichen Bedingungen verwendet wird, wobei — abhängig von der Rührfähigkeit des Reaktionsmediums — mehrere Wiederholungen möglich sind.

**Claims**

1. Process for the preparation of trimethylsilyl cyanide from trimethylsilyl chloride and alkali metal cyanide, characterised in that trimethylsilyl chloride is reacted with approximately the equimolar amount of an alkali metal cyanide in the presence of a catalytic amount of a heavy metal cyanide and in the presence of an aprotic solvent with a boiling point above 150° C, at temperatures between 130 and 250° C, and the trimethylsilyl cyanide is removed from the reaction mixture, by distillation, at the rate at which it is formed, any unreacted trimethylsilyl chloride also distilled at the same time being separated off from the trimethylsilyl cyanide by evaporation and being recycled back into the reaction vessel until all of it has reacted.

2. Process according to Claim 1, characterised in that it is carried out at temperatures between 160 and 220° C.

3. Process according to Claim 1, characterised in that the trimethylsilyl chloride and alkali metal cyanide are employed in equimolar amounts and the heavy metal cyanide is employed in amounts of 0.5 to 10 mol %, relative to the alkali metal cyanide.

4. Process according to Claim 1, characterised in that sodium cyanide or potassium cyanide is employed as the alkali metal cyanide.

5. Process according to Claim 1, characterised in that copper-I cyanide, copper-II cyanide, zinc cyanide or a complex compound of these heavy metal cyanides with an alkali metal cyanide is employed as the heavy metal cyanide.

6. Process according to Claim 1, characterised in that tetramethylene sulphone is employed as the aprotic solvent.

7. Development of the process according to Claim 1 into a semi-continuous procedure, characterised in that the mixture of aprotic solvent, heavy metal cyanide and alkali metal chloride remaining in the reaction vessel when the reaction has ended is used directly as the reaction medium for a further batch, under otherwise identical conditions, several repetitions being possible, depending on the stirrability of the reaction medium.

**Revendications**

1. Procédé de production de cyanure de triméthylsilyle à partir de chlorure de triméthylsilyle et d'un cyanure alcalin, caractérisé en ce qu'on fait réagir le chlorure de triméthylsilyle avec la quantité approximativement équimolaire d'un cyanure alcalin en présence d'une quantité catalytique d'un cyanure de métal lourd et en présence d'un solvant aprotique bouillant au-dessus de 150° C, à des températures comprises entre 130 et 250° C et on enlève le cyanure de triméthylsilyle du mélange réactionnel par distillation, à mesure qu'il se forme, et on sépare alors du cyanure de triméthylsilyle, par évaporation, le chlorure de triméthylsilyle n'ayant éventuellement pas réagi, et distillé en même temps, et on le recycle dans le récipient de réaction jusqu'à sa réaction totale.

2. Procédé suivant la revendication 1, caractérisé en ce qu'on opère à des températures comprises entre 160 et 220° C.

3. Procédé suivant la revendication 1, caractérisé en ce que le chlorure de triméthylsilyle et le cyanure de métal alcalin sont utilisés en quantités équimolaires et le cyanure de métal lourd est utilisé en quantités de 0,5 à 10 moles %, par rapport au cyanure de métal alcalin.

4. Procédé suivant la revendication 1, caractérisé en ce qu'on utilise le cyanure de sodium ou le cyanure de potassium comme cyanure de métal alcalin.

5. Procédé suivant la revendication 1, caractérisé en ce qu'on utilise comme cyanure de métal lourd le cyanure de cuivre-(I), le cyanure de cuivre-(II), le cyanure de zinc ou un composé complexe de ces cyanures de métaux lourds avec un cyanure de métal alcalin.

6. Procédé suivant la revendication 1, caractérisé en ce qu'on utilise la tétraméthylènesulfone comme solvant aprotique.

7. Adaptation du procédé suivant la revendication 1 à un mode de conduite semi-continu, caractérisée en ce que le mélange du solvant aprotique, du cyanure de métal lourd et du chlorure alcalin restant dans le récipient réactionnel une fois la réaction terminée est utilisé directement comme milieu réactionnel pour une autre charge dans des conditions autrement identiques, plusieurs répétitions étant alors possibles — selon l'agitabilité du milieu réactionnel.